# EUROPÄISCHE PATENTSCHRIFT

(11) **EP 2 029 661 B1**
(45) Veröffentlichungstag und Bekanntmachung des Hinweises auf die Patenterteilung: **03.08.2011**
(21) Anmeldenummer: 07730240.4
(22) Anmeldetag: 19.06.2007
(51) Int. Cl.: C08G 77/38, C08G 77/06

(54) **VERFAHREN ZUR HERSTELLUNG VON HOCHMOLEKULAREN ORGANOPOLYSILOXANEN**
PROCESS FOR THE PRODUCTION OF HIGH-MOLECULAR-WEIGHT ORGANOPOLYSILOXANES
PROCÉDÉ DE FABRICATION D'ORGANOPOLYSILOXANES DE POIDS MOLÉCULAIRE ÉLEVÉ

(30) Priorität: 20.06.2006 DE 102006028300
(43) Veröffentlichungstag der Anmeldung: 04.03.2009
(73) Patentinhaber: Wacker Chemie AG, 81737 München (DE)
(72) Erfinder: HERZIG, Christian, 83329 Waging Am See (DE)
(74) Vertreter: Budczinski, Angelika
(86) Internationale Anmeldenummer: PCT/EP2007/056058
(87) Internationale Veröffentlichungsnummer: WO 2007/147817

(56) Entgegenhaltungen:
- EP-A- 1 175 937
- EP-A1- 1 069 149
- US-A- 5 516 870
- US-A- 5 578 692

## Beschreibung

Die Erfindung betrifft ein Verfahren zur Herstellung von organisch modifizierten hochmolekularen Siloxanpolymeren.

In US 6,759,094 B2 werden organisch modifizierte hochmolekulare Siloxanpolymere beschrieben, die über zweimalige Hydrosilylierung synthetisiert werden: In einer ersten Stufe werden verzweigte SiH-terminierte Siloxanpolymere aufgebaut, die in einer Folgereaktion mit aliphatisch ungesättigten organischen Verbindungen wieder über Hydrosilylierung an den SiH-Enden funktionalisiert werden. Über diesen Reaktionscyclus sind sehr hochmolekulare Siloxanpolymere erhältlich, allerdings ist die durchschnittliche Anzahl der organischen Substituenten pro Molekül durch die Anzahl der SiH-Enden der Vorstufe limitiert. Bei sehr hoher Funktionalisierung besteht Gelrisiko und die Herstellung hochmolekularer Siloxanpolymere mit seitenständigen organischen Substituenten ist prinzipiell nicht möglich.

Die Anmeldungen US-A 5,981,681 und US-A 5,807,956 beschreiben die Herstellung auch hochmolekularer Siloxanpolymere, die aus telechelen Diepoxisiloxanen und Diaminopolyethern hergestellt werden und lineare Blockstruktur aufweisen. Die Synthese benötigt ausschließlich difunktionelle organische Komponenten, die üblicherweise schwer zugänglich und in der Regel kostenintensiv sind. Das Verfahren eignet sich nicht zur Herstellung von Siloxanpolymeren, die seitenständig organisch substituiert sind. Im Handel erhältliche Copolymere aus Dimethylsiloxy- und Hydrogenmethylsiloxyeinheiten sind üblicherweise methylterminiert. Diese Rohstoffe sind zwar gut geeignet zur Modifizierung mit aliphatisch ungesättigten organischen Verbindungen, aber die Herstellung hochmolekularer Siloxanpolymere wird durch das unreaktive Siloxanrückgrat nach dem Hydrosilylierungsschritt sehr erschwert. In EP-A1-1069 149 wird dielkrstellung von Emulsionen Rochmolehelarer Siloxane ganz allgemein beschrichen. Gegenstand der Erfindung ist ein Verfahren zur Herstellung von hochmolekularen Siloxanpolymeren, dadurch gekennzeichnet, dass in einer ersten Stufe ein OH-terminiertes, weitgehend lineares Siloxan (1) der allgemeinen Formel

HO(R₂SiO)ₘ(HRSiO)ₙH (I)

mit einer organischen Verbindung (2) der Formel

C_{f}H_{2f-2k-1}-Z (II)

ausgewählt aus der Gruppe von

H₂C=CR³-Z (2a)

, wenn k=0 und

R⁴C≡C-Z (2b)

, wenn k=1
umgesetzt wird, wobei
R gleich oder verschieden sein kann und einen einwertigen, von endständigen aliphatischen Kohlenstoff-Kohlenstoff-Mehrfachbindungen freien, gegebenenfalls substituierten Kohlenwasserstoffrest bedeutet,
R³ und R⁴ jeweils unabhängig voneinander die Bedeutung von Wasserstoffatom oder einem Alkylrest mit 1 bis 20 Kohlenstoffatomen haben,
m 0 oder eine ganze Zahl von 1 bis 1000, bevorzugt 0 oder eine ganze Zahl von 1 bis 300, besonders bevorzugt eine ganze Zahl von 20 bis 200, ist,
n eine ganze Zahl von 1 bis 200, bevorzugt eine ganze Zahl von 1 bis 50, besonders bevorzugt eine ganze Zahl von 3 bis 30, ist, mit der Maßgabe, dass die m+n Einheiten statistisch im Molekül verteilt sein können,
Z einen einwertigen, von endständigen aliphatischen Kohlenstoff-Kohlenstoff-Mehrfachbindungen freien Kohlenwasserstoffrest, der ein oder mehrere Heteroatome ausgewählt aus der Gruppe von Sauerstoff, Stickstoff, Bor, Silicium und Titan enthalten kann,
oder einen einwertigen Polymerrest mit mehr als 20 Kohlenstoffatomen bedeutet,
f eine ganze Zahl von 2 bis 22, vorzugsweise 2, ist und
k 0 oder 1 ist,
und in einer zweiten Stufe die in der ersten Stufe erhaltenen Siloxandiole (3) der allgemeinen Formel

HO(R₂SiO)ₘ( (Z-C_{f}H_{2f-2k}) RSiO)ₙ₋ₒ (HRSiO)ₒH (III)

mit o gleich 0 oder eine ganze Zahl von 1 bis 10, bevorzugt 0 oder eine ganze Zahl von 1 bis 3, kondensiert werden.

Bevorzugt handelt es sich bei Rest R um einwertige, von endständigen aliphatischen Kohlenstoff-Kohlenstoff-Mehrfachbindungen freie, gegebenenfalls mit Halogenatomen, Aminogruppen, Ethergruppen, Estergruppen, Epoxygruppen, Cyanogruppen oder (Poly)glykolresten substituierte Kohlenwasserstoffreste mit 1 bis 18 Kohlenstoffatomen, besonders bevorzugt um Alkylreste mit 1 bis 12 Kohlenstoffatomen, insbesondere um den Methylrest. Bevorzugt enthält Rest R keine Gruppen, die die Hydrosilylierungsreaktion wesentlich behindern.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Methoxyethyl-, Ethoxyethyl- und der Ethoxyethoxyethylrest.

Beispiele für Reste R³ und R⁴ sind jeweils unabhängig voneinander Wasserstoffatom und die für Rest R angegebenen Alkylreste.

Bevorzugt handelt es sich bei Rest R³ und R⁴ jeweils unabhängig voneinander um ein Wasserstoffatom.

Beispiele für erfindungsgemäß eingesetzte Siloxane (1) sind Kondensate aus Dimethylsiloxy- und Methylhydrogensiloxyeinheiten oder Diethylsiloxy- und Methylhydrogensiloxyeinheiten.

Obwohl in Formel (I) nicht angegeben, können bis zu 3 Molprozent der m Diorganosiloxyeinheiten bzw. n Hydrogenorganosiloxyeinheiten durch andere Siloxyeinheiten, wie RSiO_{3/2}- und SiO_{4/2}-Einheiten, ersetzt sein mit R gleich der vorstehend dafür angegebenen Bedeutung, wobei aber ein Molprozentgehalt von unter 1 bevorzugt ist. Ebenso liegt es im Bereich der Erfindung, dass in Formel (I) geringe Mengen der OH-Gruppen aufweisenden Endgruppen durch R₃SiO-Gruppen ersetzt sein können, was technisch nicht auszuschließen aber nicht bevorzugt ist. Vorzugsweise ist das Molverhältnis aus der Summe von (HO)R₂SiO- und HRSiO(OH)-Einheiten zu R₃SiO-Gruppen größer 2, besonders bevorzugt größer 20.

Die erfindungsgemäß eingesetzten Siloxane (1) haben eine Viskosität von bevorzugt 10 bis 10 000 mPas, besonders bevorzugt von 20 bis 2 000 mPas, jeweils bei 25°C.

Siloxane (1) sind bekannt und können nach in der Siliciumchemie gängigen Methoden hergestellt werden.

Die organischen Verbindungen (2) enthalten aliphatische C-C-Doppel- oder Dreifachbindungen, die gegenüber Si-H-Gruppen in Hydrosilylierungsreaktionen reaktiv sind und diese unter Bildung von Si-C-Bindungen anlagern.

Wenn k=0 ist, enthält Komponente (2) eine Doppelbindung (2a). Wenn k=1 ist, enthält Komponente (2) eine Dreifachbindung (2b).

Bei der Anlagerung der SiH-Gruppe in Verbindung (1) an die Doppel- oder Dreifachbindung in (2a) oder (2b) kommt es zur dem Fachmann bekannten Bildung von Isomeren wie folgt:

H₂C=CR³-Z + - Si-H → -Si-CH₂-CHR³-Z (iii)

H₂C=CR³-Z + -Si-H → H₃C-C(-Si)R³-Z (iv)

R⁴C≡-C-Z + -Si-H → -Si-CR⁴=CH-Z (v)

und

R⁴C≡C-Z + -Si-H → R⁴HC=C(-Si)-Z (vi),

wobei R³ und R⁴ eine der obengenannten Bedeutungen haben.

Die -C_{f}H_{2f-2k}-Gruppe im erfindungsgemäß in der ersten Stufe hergestellten Organosiloxan umfasst diese Isomerenbildung und bedeutet daher vorzugsweise die isomeren Reste
- CH₂-CHR³- von (iii) und 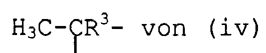 und
- CR⁴=CH- von (v) und 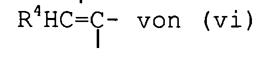
sowie f daher die Gesamtzahl der C-Atome in der H₂C=CR³-Gruppe von (2a) oder der R⁴C≡C-Gruppe von (2b), wobei R³ und R⁴ eine der obengenannten Bedeutungen haben.

Da R³ und R⁴ vorzugsweise Wasserstoffatome sind, ist f daher vorzugsweise 2.

Beispiele für die H₂C=CR³-Gruppe in der organischen Verbindung (2a) sind

H₂C=CH-,

H₂C=C(CH₃)-,

H₂C=C (C₄H₉) -

und

H₂C=C (C₈H₁₇) - .

Beispiele für die R⁴C≡C-Gruppe in der organischen Verbindung (2b) sind

HC≡C-,

CH₃C≡C- und

C₄H₉C≡C-.

Der an die Doppel- oder Dreifachbindung gebundene Rest Z in (2a) oder (2b) kann außer Kohlenstoff- und Wasserstoffatomen auch ein oder mehrere Heteroatome ausgewählt aus der Gruppe von Sauerstoff, Stickstoff, Bor, Silicium und Titan enthalten und ist in einer Hydrosilylierungsreaktion gegenüber SiH-Gruppen nicht reaktiv.

Die erfindungsgemäß eingesetzte ungesättigte Verbindung (2) kann somit funktionelle Gruppen enthalten, wie Hydroxy-, Ether-, Ester-, Amido-, Urethan-, Harnstoff-, Amino-, Oximo-, Imino-, Carboxyl-, Carbonyl- oder Epoxygruppen. Bevorzugt enthält sie keine Gruppen, die die Hydrosilylierungsreaktion wesentlich behindern.

Beispiele für Reste Z sind

- (CH₂)₅CH₃,

-(CH₂)₉CH₃,

- (CH₂)₁₅CH₃,

-C (CH₃)₂OH,

- (CH₂)₄OH,

-OC₄H₉,

-O₃CCH₃,

-CO₂CH₃,

- (CH₂)₈CO₂C₃H₇,

- (CH₂)₈CON(C₂H₅)₂,

-CH₂O₂CNHC₁₈H₃₇,

-CH₂NHCONHC₁₈H₃₇,

-CH₂NH₂,

- (CH₂)₈CO₂H,

-CO₂H,

-COCH₃

und

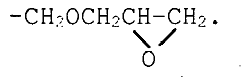

Bevorzugt besteht die erfindungsgemäß eingesetzte organische Verbindung (2) aus Kohlenstoff-, Wasserstoff-, gegebenenfalls Sauerstoff- und gegebenenfalls Stickstoffatomen, wobei solche, die aus Kohlenstoff-, Wasserstoff- und gegebenenfalls Sauerstoffatomen bestehen, besonders bevorzugt sind.

Bei den organischen Verbindungen (2) handelt es sich um handelsübliche Produkte bzw. können nach in der Chemie gängigen Methoden hergestellt werden.

Verbindung (2) wird in einer solchen Menge eingesetzt, dass das Molverhältnis der Reste mit aliphatischer Kohlenstoff-Kohlenstoff-Mehrfachbindung zu SiH-Gruppen der Komponente (1) vorzugsweise zwischen 0,5 und 5, besonders bevorzugt zwischen 1,0 und 3,0, insbesondere zwischen 1,0 und 1,8, liegt.

Die erste Stufe des erfindungsgemäßen Verfahrens wird bevorzugt in Gegenwart von die Anlagerung von Si-gebundenem Wasserstoff an aliphatische Mehrfachbindung fördernden Katalysatoren (7), einem sogenanntem Hydrosilylierungskatalysator, durchgeführt.

Als die Anlagerung von Si-gebundenem Wasserstoff an aliphatische Mehrfachbindung fördernde Katalysatoren (7) können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxid, Aluminiumoxid oder Aktivkohle befinden kann, Verbindungen oder Komplexe von Platin, wie Platinhalogenide, z.B. PtCl₄, H₂PtCl₆·6H₂O, Na₂PtCl₄·4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆·6H₂O und Cyclohexanon, Platin-Vinyl-siloxankomplexe, wie Platin-1,3-Divinyl-1,1,3,3-tetramethyldisiloxankomplexe mit oder ohne Gehalt an nachweisbarem anorganisch gebundenem Halogen, Bis-(γ-picolin)-platindichlorid, Trimethylendipyridinplatindichlorid, Dicyclopentadienplatindichlorid, Dimethylsulfoxydethylenplatin-(II)-dichlorid, Cyclooctadien-Platindichlorid, Norbornadien-Platindichlorid, γ-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe.

Der Katalysator (7) wird im ersten Verfahrensschritt vorzugsweise in Mengen von 0,2 bis 20 Gew.-ppm (Gewichtsteilen je Million Gewichtsteilen), bevorzugt in Mengen von 1 bis 10 Gew.-ppm, jeweils berechnet als elementares Platin und bezogen auf das Gesamtgewicht von Siloxan (1) und Verbindung (2) eingesetzt.

Der erste Verfahrensschritt wird vorzugsweise beim Druck der umgebenden Atmosphäre, also etwa 900 bis 1100 hPa, durchgeführt, es kann aber auch bei höheren oder niedrigeren Drücken durchgeführt werden. Ferner wird der erste Verfahrensschritt vorzugsweise bei einer Temperatur von 20°C bis 150°C, bevorzugt 40°C bis 100°C, durchgeführt.

Falls erwünscht, können bei dem ersten Verfahrensschritt Radikalinhibitoren, wie 4-Methoxyphenol, 2,6-Bis(tert.butyl)-4-methylphenol, Phenothiazin, Hydrochinon oder Brenzcatechin mitverwendet werden. Die Radikalinhibitoren werden dabei vorzugsweise in Mengen von 10 bis 500 Gew.-ppm, bezogen auf das Gesamtgewicht an Verbindungen (1) und (2), eingesetzt.

Im ersten Verfahrensschritt können organische Lösungsmittel mitverwendet werden, die vorzugsweise gegenüber der Reaktion von Verbindung (1) mit Verbindung (2) inert sind. Beispiele für inerte, organische Lösungsmittel sind Toluol, Xylol, Octanisomere, Heptanisomere, Butylacetat, 1,2-Dimethoxyethan, Tetrahydrofuran und Cyclohexan.

Die gegebenenfalls mitverwendeten inerten organischen Lösungsmittel können nach dem ersten bzw. zweiten Verfahrensschritt destillativ entfernt werden oder im Reaktionsgemisch verbleiben.

Die erste Stufe des erfindungsgemäßen Verfahrens wird bevorzugt unter Inertgasatmosphäre durchgeführt, wie z.B. Stickstoff, wobei aber die Anwesenheit kleiner Mengen Sauerstoff, beispielsweise bis zu ca. 10 000 Vol.-ppm, reaktionsbeschleunigend wirken kann.

Das Kondensieren der in der ersten Stufe erhaltenen Verbindung (3) gemäß der zweiten Stufe des erfindungsgemäßen Verfahrens führt zur Vergrößerung des Molekulargewichts und kann in Anwesenheit oder Abwesenheit von Kondensationsbeschleuniger (6) durchgeführt werden.

Als Kondensationsbeschleuniger (6) können alle Komponenten, die auch bisher bei Kondensationsreaktionen eingesetzt werden, verwendet werden. Beispiele für Kondensationsbeschleuniger (6) sind Aluminium-, Wismut-, Zink- und Titanverbindungen und organische Zinnverbindungen, wie Di-n-butylzinndilaurat und Di-n-butylzinndiacetat, Di-n-butylzinnoxid, Dioctylzinndiacetat, Dioctylzinndilaurat, Dioctylzinnoxid sowie Umsetzungsprodukte dieser Verbindungen mit Alkoxysilanen, wie Tetraethoxysilan, Säuren, wie Toluolsulfonsäuren und Perfluorcarbonsäuren, wobei Titanverbindungen und Säuren bevorzugt sowie Sulfonsäuren und aktivierte Carbonsäuren besonders bevorzugt sind.

Falls bei der zweiten Stufe des erfindungsgemäßen Verfahrens Kondensationsbeschleuniger (6) eingesetzt werden, handelt es sich um Mengen von vorzugsweise 0,01 bis 3 Gewichtsteilen, bevorzugt 0,05 bis 2 Gewichtsteilen, jeweils bezogen auf 100 Gewichtsteile Verbindung (3).

Die erfindungsgemäße Kondensation kann mit oder ohne Zusatz weiterer SiOH-funktioneller Verbindungen (**Variante a**) unter Freisetzen von Wasser erfolgen und/oder durch Zusatz von Siliciumverbindungen, die mindestens zwei hydrolysierbare Gruppen pro Molekül enthalten, die mit den Silanolgruppen der Verbindung (3) kondensieren (**Variante b**).

Bei den SiOH-funktionellen Verbindungen (5), die im zweiten Schritt des erfindungsgemäßen Verfahrens eingesetzt werden können, handelt es sich um beliebige, bisher bekannte SiOH-funktionelle Organosiliciumverbindungen. Beispiele für Verbindungen (5) sind Siloxane der Formel (I) mit n gleich 0, wie z.B. handelsübliche Polydimethylsiloxane mit endständigen Silanolgruppen.

Falls im zweiten Schritt des erfindungsgemäßen Verfahrens Verbindungen (5) eingesetzt werden, handelt es sich um Mengen von vorzugsweise 10 bis 500 Gewichtsteilen, besonders bevorzugt 50 bis 300 Gewichtsteilen, jeweils bezogen auf 100 Gewichtsteile Verbindung (3).

Bevorzugt ist im zweiten Schritt des erfindungsgemäßen Verfahrens aber die Kondensation mit Siliciumverbindungen (4), die mindestens 2 hydrolysierbare Gruppen pro Molekül enthalten (Variante b). Diese Verbindungen können Monomere, Oligomere oder Polymere sein, wobei der Einsatz von Monomeren, also Silanen, bevorzugt ist.

Wiederum bevorzugt ist die Verwendung von Alkoxysilanen (4), die zur Kondensation mit Verbindungen (3) zwar auch geringe Mengen wirksamer Katalysatoren brauchen, aber im Vergleich zur Acyl- oder Halogensilanen neutrale Spaltprodukte liefern.

Bei der gegebenenfalls eingesetzten Verbindung (4) handelt es sich besonders bevorzugt um Silane der allgemeinen Formel

AₐR¹bSi(OR²)_{4-a-b} (IV),

wobei
- A: gleich oder verschieden sein kann und einen einwertigen Rest der Formel -CR⁵₂-Y bedeutet,
- R⁵: gleich oder verschieden sein kann und ein Wasserstoffatom oder einen Alkylrest bedeutet,
- Y: ein monofunktionelles Heteroatom aus der Gruppe der Haloge- ne, der monosubstituierten Atome O und S und der substitu- ierten Atome N und P bedeutet,
- R¹: gleich oder verschieden sein kann und ein einwertiger, gege- benenfalls substituierter Kohlenwasserstoffrest ist,
- R²: gleich oder verschieden sein kann und ein Alkylrest ist,
- a: gleich 0, 1 oder 2, bevorzugt 1, ist,
- b: gleich 0, 1 oder 2, bevorzugt 1, ist,
mit der Maßgabe, dass a+b≤2 ist.

Der Einsatz von Silanen der Formel (IV) mit einem Rest A ist insbesondere bevorzugt, da Kondensationen mit Verbindung (3) selbst bei 25°C meist ohne zusätzliche Katalyse ablaufen. Hierbei werden Reaktionszeiten von wenigen Minuten bis zu mehreren Stunden erreicht. Die entstehenden Spaltalkohole können im Reaktionsgemisch belassen oder im Vakuum entfernt werden.

Beispiele für Rest R¹ sind die für Rest R oben angegebenen Beispiele.

Bevorzugt handelt es sich bei Rest R¹ um gegebenenfalls substituierte Kohlenwasserstoffreste mit 1 bis 18 Kohlenstoffatomen, wobei der Methyl- und der Ethylrest besonders bevorzugt sind.

Beispiele für Rest R² sind die für Rest R oben angegebenen Beispiele.

Bevorzugt handelt es sich bei Rest R² um Alkylreste mit 1 bis 8 Kohlenstoffatomen, wobei Alkylreste mit 1 oder 2 Kohlenstoffatomen besonderes bevorzugt sind.

Beispiele für Rest R⁵ sind Wasserstoffatom und die für Rest R oben angegebenen Beispiele.

Bevorzugt handelt es sich bei Rest R⁵ um Alkylreste mit 1 bis 4 Kohlenstoffatomen, wobei Wasserstoffatom besonderes bevorzugt ist.

Beispiele für Reste Y sind
der Fluor-, Chlor-, Brom- oder Jodsubstituent,
die Gruppen -OH oder -OR⁶
die Gruppen -SH oder -SR⁶,
die Gruppen -NH₂, -NHR⁶ oder -NR⁶₂ und
die Gruppen -PR⁶₂, -P(OR⁶)₂, und -PO(OR⁶)₂,
mit R⁶ gleich einem einwertigen organischen, gegebenenfalls N-und/oder O-Atome enthaltenden Rest, vorzugsweise einen einwertigen, gegebenenfalls N- und/oder O-Atome enthaltenden Kohlenwasserstoffrest mit 1 bis 18 Kohlenstoffatomen.

Beispiele für Reste A sind Hydroxymethyl-, Methoxymethyl-, Ethoxymethyl-, 2-Ethoxyethoxymethyl-, 2-Butoxyethoxymethyl-, Acetoxymethyl-, Mercaptomethyl-, Ethylthiomethyl-, Dodecylthiomethyl-, Aminomethyl-, Methylaminomethyl-, Dimethylaminomethyl-, Diethylaminomethyl-, Dibutylaminomethyl-, Cyclohexylaminomethyl-, Anilinomethyl-, 3-Dimethylaminopropyl- aminomethyl-, Bis(3-dimethylaminopropyl)aminomethyl-, Diethylphosphinomethyl-und Dibutylphosphinomethylrest sowie Gruppen der Formeln -CH₂NHCOR⁶, -CH₂NHCO₂R⁶ oder -CH₂NHCONHR⁶, wobei R⁶ die oben dafür angegebene Bedeutung hat.

Vorzugsweise ist A ein Rest der Formel -CH₂NHR⁶ oder -CH₂NR⁶₂, wobei R⁶ die oben dafür angegebene Bedeutung hat.

Beispiele für gegebenenfalls eingesetzte Silane (4) sind 2-Butoxyethoxymethyltrimethoxysilan, Methoxymethyl-methyldiethoxysilan, Diethylaminomethylmethyldimethoxysilan, Dibutylaminomethyltriethoxysilan, Dibutylaminomethyltributoxysilan, Cyclohexylaminomethyltrimethoxysilan, Cyclohexylaminomethyltriethoxysilan, Cyclohexylaminomethyl-methyldiethoxysilan, Anilinomethyltriethoxysilan, 3-Dimethylaminopropyl-aminomethyltrimethoxysilan, Acetylaminomethylmethyldimethoxysilan, Ethylcarbamoylmethyltrimethoxysilan, Ethylcarbamoylmethyl-methyldimethoxysilan, Diisopropylaminocarbamoylmethyl-methyldimethoxysilan und Imidazolylcarbamoylmethyl-methyldimethoxysilan.

Bei den Verbindungen (4) handelt es sich um handelsübliche Produkte bzw. können nach in der Siliciumchemie gängigen Methoden hergestellt werden.

Falls im zweiten Schritt des erfindungsgemäßen Verfahrens Siliciumverbindung (4) eingesetzt werden, handelt es sich um Mengen von vorzugsweise 0,01 bis 10 Gewichtsteilen, besonders bevorzugt 0,1 bis 2,0 Gewichtsteilen, jeweils bezogen auf 100 Gewichtsteile Verbindung (3).

Der zweite Verfahrensschritt wird vorzugsweise beim Druck der umgebenden Atmosphäre, also etwa 900 bis 1100 hPa, durchgeführt, es kann aber auch bei höheren oder niedrigeren Drücken durchgeführt werden. Ferner wird der zweite Verfahrensschritt vorzugsweise bei einer Temperatur von 10 bis 120°C, bevorzugt 25 bis 80°C, durchgeführt.

Die zweite Stufe des erfindungsgemäßen Verfahrens wird bevorzugt unter Inertgasatmosphäre durchgeführt, wie z.B. unter Stickstoff.

Aufgrund der gegebenenfalls hohen Viskositäten der Kondesationsprodukte aus Siloxandiolen (3) und gegebenenfalls Kondensationspartnern (4) kann es aus Handhabungsgründen von Vorteil sein, im zweiten Schritt des erfindungsgemäßen Verfahrens Verdünnungsmittel, wie z.B. organische Lösemittel, wie sie beispielsweise im ersten Verfahrensschritt eingesetzt werden können, oder Siloxane, wie z.B. Cyclosiloxane und kurzkettige lineare wie auch verzweigte Organosiloxane oder Dimethylglycolsiloxane, einzusetzen.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Das erfindungsgemäße Verfahren kann diskontinuierlich, kontinuierlich oder semikontinuierlich durchgeführt werden, wobei eine diskontinuierliche Fahrweise bevorzugt ist.

Die nach dem erfindungsgemäßen Verfahren hergestellten Polymere können nun direkt weiterverarbeitet oder nach beliebigen, bisher bekannten Verfahren isoliert werden, wie z.B. durch Entfernen ggf. mitverwendeter Verdünnungsmittel.

Bei dem erfindungsgemäßen Verfahren werden organisch modifizierte hochmolekulare Siloxanpolymere erhalten, die kovalent gebundene, bevorzugt über SiOSi, Segmente der Formel

-O (R₂SiO)ₘ( (Z-C_{f}H_{2f-2k})RSiO)ₙ- (V)

enthalten, wobei R, Z, m, f, k und n die oben dafür angegebenen Bedeutungen haben.

Je nach Struktur der gegebenenfalls eingesetzten Verbindungen (4) und/oder (5) erhält man lineare (z.B. bei Silan der Formel (IV) mit a+b=2) oder verzweigte bis dendrimerartige (z.B. bei Silan der Formel (IV) mit a+b<2) Siloxanpolymere.

Die Viskosität dieser erfindungsgemäß hergestellten Siloxanpolymere beträgt bevorzugt mindestens 5000 mPa·s, besonders bevorzugt mindestens 20 000 mPa·s, insbesondere mindestens 50 000 mPa·s, jeweils bei 25°C. Durch den Kondensationsschritt der zweiten Stufe kann man problemlos Viskositäten von über 1 Million mPa·s erhalten.

Bei den erfindungsgemäß hergestellten Siloxanpolymeren handelt es sich bevorzugt um hochviskose Flüssigkeiten. Bei Verwendung eines Silans der Formel (IV) mit a+b<2 können bei geeigneter Stöchiometrie, wenn also das molare Verhältnis von SiOH im Siloxandiol (3) zu SiOR² in Verbindung (4) etwa gleich ist, auch elastomerartige Feststoffe erhalten werden. Eine besondere Ausführungsform des erfindungsgemäßen Verfahrens besteht darin, dass man solche Elastomergele durch Mitverwendung eines geeigneten Verdünnungsmittels, wie Dimethylglycolsiloxane, in gequollenem Zustand erzeugt und das Produkt daher über Pumpen, Schnecken oder ähnliche Medien gefördert werden kann.

Die erfindungsgemäß hergestellten Polymeren können nun für alle Zwecke eingesetzt werden, für die auch bisher Organopolysiloxane eingesetzt worden sind.

Das erfindungsgemäße Verfahren hat den Vorteil, dass es einfach in der Durchführung ist und hohe Ausbeuten an Polymeren liefert.

Das erfindungsgemäße Verfahren hat den Vorteil, dass die Synthese organisch modifizierter hochmolekularer Siloxanpolymere ermöglicht ist, bei dem die Organomodifizierung aufgrund der guten Zugänglichkeit von olefinisch bzw. acetylenisch ungesättigten organischen Vorstufen über Hydrosilylierung erfolgt und die Molekulargewichtserhöhung einfach und sicher steuerbar ist.

Das erfindungsgemäße Verfahren ist besonders attraktiv, wenn hochmolekulare Siloxanpolymere hergestellt werden sollen, die aus Hydrosilylierungsrohstoffen hergestellt werden, die miteinander wenig oder gar nicht mischbar sind. In solchen Fällen ist es von Vorteil, niedermolekulare Siloxane (1) einzusetzen, und diese erst nach erfolgter Hydrosilylierung in Hochpolymere überzuführen, da die Umsetzung von Verbindungen (2) mit hochmolekularen H-Siloxanen aufgrund noch schlechterer Mischbarkeit lange Zeiten, hohe Katalysatormengen und gegebenenfalls auch hohe Temperaturen erfordert oder auch keine ausreichende Umsetzung erzielbar ist.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

Als Jodzahl wird in den Beispielen die Zahl bezeichnet, welche die bei der Addition an die aliphatische Mehrfachbindung verbrauchte Jodmenge in Gramm pro 100 Gramm eingesetztes, zu untersuchendes Material angibt.

### Beispiel 1

83g 1-Octadecen werden mit 20g eines Hydrogensiloxans der Formel HO(Me₂SiO)₆₀(HMeSiO)_{14,3}H mit statischer Monomerenverteilung bei 25°C unter Stickstoffatmosphäre gemischt und auf 90°C erwärmt. Die Hydrosilylierung wird durch Zugabe von 0,38g einer 1%igen Lösung von Hexachloroplatinsäure in Isopropanol gestartet und bei 100°C werden über einen Zeitraum von 20 Minuten weitere 80g des selben H-Siloxans zudosiert. Es werden noch mal 0,19g der Katalysatorlösung eindosiert. Nach einer Gesamtreaktionszeit von 3 Stunden wird ein SiH-Umsatz von über 98% erreicht.

Zur Erhöhung des Molekulargewichts durch Kondensation der Silanolgruppen mit Alkoxy-Si-Gruppen werden 2,0g Aminoethylaminopropyltrimethoxysilan zugesetzt und der gesamte Ansatz noch eine Stunde bei 100°C gehalten. Die Viskosität steigt sehr stark an, bis das Reaktionsgemisch kaum noch rührbar ist. Beim Abkühlen erstarrt das Produkt mit einem Schmelzpunkt von ca. 42°C. Es ist in der dreifachen Menge Toluol klar löslich und damit nicht geliert. Das durchschnittliche Siloxanpolymer enthält ca. 90 Octadecylgruppen.

### Beispiel 2

32,7g 2-Methyl-3-buten-2-ol werden mit 0,32g des in Beispiel 1 verwendeten Pt-Katalysators unter Stickstoffatmosphäre auf 90°C erwärmt. Man dosiert insgesamt 120g des H-Siloxans der Formel HO(Me₂SiO)₆₀(HMeSiO)_{14,3}H zu und hält die Innentemperatur bei ca. 100°C. Nach einer Stunde ist im IR-Spektrum kein SiH mehr nachweisbar, was einem Umsatz von weit über 99% entspricht. Überschüssiges Carbinol wird im Vakuum entfernt, worauf man ein Polycarbinolsiloxan mit einer Viskosität von 14300 mPa·s und einem Molekulargewicht von Mn=6600 erhält.
a) 66g des Polycarbinolsiloxans werden bei 25°C mit 1,9g Diethylaminomethylmethyldimethoxysilan versetzt und gut homogenisiert. Innerhalb weniger Minuten setzt eine starke Viskositätserhöhung ein, die schließlich zu einer standfesten, elastomerartigen Masse führt. Nach 24 Stunden bei 25°C wird eine Probe in der 10-fachen Menge Isopropanol dispergiert. Man erhält nach drei Tagen eine klare, hochviskose Lösung: Das hochkondensierte Polycarbinolsiloxan ist vollständig und rückstandsfrei in Isopropanol löslich. Im ²⁹Si-NMR ergibt sich das Molverhältnis von -Me₂SiOH/MeSi(CH₂N)O anhand der entsprechenden Integrale zu 1:7,6. Ein durchschnittliches Siloxanpolymer enthält demnach 15,2 α-Aminosilanmonomere: Damit sind durchschnittlich 16,2 Polycarbinolsiloxanketten kondensiert, woraus sich bei einer Gesamtlänge von rund 1200 Siloxyeinheiten eine durchschnittliche Anzahl von 232 tert. Carbinolgruppen ergibt.
b) Ohne Zusatz von Alkoxysilan werden 50g des Polycarbinolsiloxans mit 50g Me-Siloxan der Formel HO(Me₂SiO)₄₈H gemischt. Die zunächst trübe Abmischung ist nach Zusatz von 30g Toluol bei 100°C klar. Es werden 0,25g Toluolsulfonsäurelösung (20%ig in THF) zugegeben, danach heizt man auf ca. 125°C, worauf eine starke Zunahme der Viskosität sichtbar wird. Um die Rührbarkeit zu gewährleisten, setzt man weitere 30g Toluol zu und hält den Ansatz noch weitere zwei Stunden auf Rückfluss. Die viskose Lösung ergibt nach dem Eintrocknen einen klebrigen, farblosen Film, der völlig klar ist. Die ursprünglich nicht mischbaren Kondensationsedukte sind unter saurer Katalyse zu einem Linearpolymer kondensiert. Es enthält carbinolhaltige und carbinolfreie Blocksegmente. Im ²⁹Si-NMR ergaben sich keine Hinweise auf die Bildung von Cyclosiloxanen, was equilibrierende Versuchsbedingungen ausschließt.

### Beispiel 3

800g Allylalkoholpolyethoxylat mit einer Jodzahl von 49,0 werden mit 401g des Hydrogensiloxans aus Beispiel 1 turbolent vermischt und unter Stickstoffatomosphäre auf 87°C erwärmt. Nacheinander werden 0,36g Cyclohexenoxid und 1,25g einer 1%igen Lösung von Hexachloroplatinsäure in Isopropanol zudosiert. Unter exothermer Reaktion wird die Mischung nach 12 Minuten klar. Nach einer Stunde wird bei ca. 100°C noch mal die gleiche Menge Pt-Katalysator zudosiert, wonach man den Ansatz noch weitere zwei Stunden auf gleicher Temperatur hält. Die IR-Analytik auf restliches SiH zeigt einen Umsatz von mehr als 99%. Der Ansatz hat eine Viskosität von 4470 mm²/s bei 25°C.

Mit Anilinomethylmethyldiethoxysilan werden bei 25°C zwei Kondensationsversuche durchgeführt.
a) Zusatz von 0,50% Silan und homogene Verteilung ergibt nach einem Tag ein klares hochviskoses Polyethersiloxanpolymer mit 21 Pa·s (25°C), welches sich in der gleichen Menge Wasser klar löst.
b) Zusatz von 1,5% Silan und schnelle, homogene Verteilung resultiert nach wenigen Minuten in einer standfesten, elastomerartigen Masse, die sich in Wasser klar löst. Das Integralverhältnis SiCH₂CH₂-/SiOH von 137:1 ergibt einen Gehalt von durchschnittlich 274 Polyetherketten pro Siloxankette.

## Patentansprüche

1. Verfahren zur Herstellung von hochmolekularen Siloxanpolymeren, **dadurch gekennzeichnet, dass**
in einer ersten Stufe ein OH-terminiertes weitgehend lineares Siloxan (1) der allgemeinen Formel
HO(R₂SiO)ₘ(HRSiO)ₙH (I)
mit einer organischen Verbindung (2) der Formel
C_{f}H_{2f-2k-1}-Z (II)
ausgewählt aus der Gruppe von
H₂C=CR³-Z (2a)
, wenn k=0 und
R⁴C≡C-Z (2b)
, wenn k=1
umgesetzt wird, wobei
R gleich oder verschieden sein kann und einen einwertigen, von endständigen aliphatischen Kohlenstoff-Kohlenstoff-Mehrfachbindungen freien, gegebenenfalls substituierten Kohlenwasserstoffrest bedeutet,
R³ und R⁴ jeweils unabhängig voneinander die Bedeutung von Wasserstoffatom oder einem Alkylrest mit 1 bis 20 Kohlenstoffatomen haben,
m 0 oder eine ganze Zahl von 1 bis 1000 ist,
n eine ganze Zahl von 1 bis 200 ist, mit der Maßgabe, dass die m+n Einheiten statistisch im Molekül verteilt sein können,
Z einen einwertigen, von endständigen aliphatischen Kohlenstoff-Kohlenstoff-Mehrfachbindungen freien Kohlenwasserstoffrest, der ein oder mehrere Heteroatome ausgewählt aus der Gruppe von Sauerstoff, Stickstoff, Bor, Silicium und Titan enthalten kann,
oder einen einwertigen Polymerrest mit mehr als 20 Kohlenstoffatomen bedeutet,
f eine ganze Zahl von 2 bis 22 ist und
k 0 oder 1 ist,
und in einer zweiten Stufe die in der ersten Stufe erhaltenen Siloxandiole (3) der allgemeinen Formel
HO(R₂SiO)ₘ( (Z-C_{f}H_{2f-2k})RSiO)ₙ₋ₒ(HRSiO)ₒH (III)
mit o gleich 0 oder eine ganze Zahl von 1 bis 10,
kondensiert werden.

2. Verfahren nach Anspruch 1, **dadurch gekennzeichnet, dass** es sich bei der eingesetzten organischen Verbindung (2) um solche handelt, die aus Kohlenstoff-, Wasserstoff-, gegebenenfalls Sauerstoff- und gegebenenfalls Stickstoffatomen besteht.

3. Verfahren nach Anspruch 1 oder 2, **dadurch gekennzeichnet, dass** Verbindung (2) in einer solchen Menge eingesetzt wird, dass das Molverhältnis der Reste mit aliphatischer Kohlenstoff-Kohlenstoff-Mehrfachbindung zu SiH-Gruppen der Komponente (1) zwischen 0,5 und 5 liegt.

4. Verfahren nach einem oder mehreren der Ansprüche 1 bis 3, **dadurch gekennzeichnet, dass** die Kondensation durch Zusatz von Siliciumverbindungen (4), die mindestens zwei hydrolysierbare Gruppen pro Molekül enthalten, die mit den Silanolgruppen der Verbindung (3) kondensieren, erfolgt.

5. Verfahren nach Anspruch 4, **dadurch gekennzeichnet, dass** es sich bei den Siliciumverbindungen, die mindestens zwei hydrolysierbare Gruppen pro Molekül enthalten, um Silane der allgemeinen Formel
AₐR¹_{b}Si (OR²)_{4-a-b} (IV)
handelt, wobei
A gleich oder verschieden sein kann und einen einwertigen Rest der Formel -CR⁵₂-Y bedeutet,
R⁵ gleich oder verschieden sein kann und ein Wasserstoffatom oder einen Alkylrest bedeutet,
Y ein monofunktionelles Heteroatom aus der Gruppe der Haloge- ne, der monosubstituierten Atome O und S und der substitu- ierten Atome N und P bedeutet,
R¹ gleich oder verschieden sein kann und ein einwertiger, gege- benenfalls substituierter Kohlenwasserstoffrest ist,
R² gleich oder verschieden sein kann und ein Alkylrest ist,
a gleich 0, 1 oder 2 ist,
b gleich 0, 1 oder 2 ist,
mit der Maßgabe, dass a+b≤2 ist.

6. Verfahren nach Anspruch 4 oder 5, **dadurch gekennzeichnet, dass** Siliciumverbindungen (4) im Mengen von 0,01 bis 10 Gewichtsteilen, bezogen auf 100 Gewichtsteile Verbindung (3), eingesetzt werden.

## Claims

1. Process for the production of high-molecular-weight siloxane polymers, **characterized in that**
in a first stage an OH-terminated substantially linear siloxane (1) of the general formula
HO(R₂SiO)ₘ(HRSiO)ₙH (I)
is reacted with an organic compound (2) of the formula
C_{f}H_{2f-2k-1}-Z (II)
selected from the group of
H₂C=CR³-Z (2a)
, if k = 0 and
R⁴C≡C-Z (2b)
, if k = 1,
where
R may be identical or different and is a monovalent, optionally substituted hydrocarbon radical free from terminal aliphatic carbon-carbon multiple bonds,
R³ and R⁴, in each case independently of one another, have the meaning hydrogen atom or an alkyl radical having 1 to 20 carbon atoms,
m is 0 or an integer from 1 to 1000,
n is an integer from 1 to 200, with the proviso that the m + n units can be randomly distributed in the molecule,
Z is a monovalent hydrocarbon radical free from terminal aliphatic carbon-carbon multiple bonds which can contain one or more heteroatoms selected from the group of oxygen, nitrogen, boron, silicon and titanium,
or is a monovalent polymer radical having more than 20 carbon atoms,
f is an integer from 2 to 22 and
k is 0 or 1,
and in a second stage the siloxanediols (3) obtained in the first stage and of the general formula
HO(R₂SiO)ₘ((Z-C_{f}H_{2f-2k})RSIO)ₙ₋ₒ(HRSiO)OH (III),
where o is 0 or an integer from 1 to 10,
are condensed.

2. Process according to Claim 1, **characterized in that** the organic compound (2) used is one which consists of carbon atoms, hydrogen atoms, optionally oxygen atoms and optionally nitrogen atoms.

3. Process according to Claim 1 or 2, **characterized in that** compound (2) is used in an amount such that the molar ratio of radicals having aliphatic carbon-carbon multiple bond to SiH groups of component (1) is between 0.5 and 5.

4. Process according to one or more of Claims 1 to 3, **characterized in that** the condensation takes place by adding silicon compounds (4) which contain at least two hydrolysable groups per molecule which condense with the silanol groups of compound (3).

5. Process according to Claim 4, **characterized in that** the silicon compounds which contain at least two hydrolysable groups per molecule are silanes of the general formula
AₐR¹_{b}Si(OR²)_{4-a-b} (IV)
where
A may be identical or different and is a mono- valent radical of the formula -CR⁵₂-Y,
R⁵ may be identical or different and is a hydrogen atom or an alkyl radical,
Y is a monofunctional heteroatom from the group of halogens, of monosubstituted atoms O and S and of substituted atoms N and P,
R¹ may be identical or different and is a mono- valent, optionally substituted hydrocarbon radical,
R² may be identical or different and is an alkyl radical,
a is 0, 1 or 2,
b is 0, 1 or 2,
with the proviso that a + b is ≤ 2.

6. Process according to Claim 4 or 5, **characterized in that** silicon compounds (4) are used in amounts of from 0.01 to 10 parts by weight, based on 100 parts by weight of compound (3).

## Revendications

1. Procédé pour la préparation de polymères siloxane de masse moléculaire élevée, **caractérisé en ce que**
dans une première étape on fait réagir un siloxane (1) essentiellement linéaire, à terminaison OH, de formule générale
HO(R₂SiO)ₘ(HRSiO)ₙH (I)
avec un composé organique (2) de formule
C_{f}H_{2f-2k-1}-Z (II)
choisi dans l'ensemble constitué par
H₂C=CR³-Z (2a), lorsque k = 0 et
R⁴C≡C-Z (2b), lorsque k = 1
R pouvant être le même ou différent et représentant un radical hydrocarboné monovalent, exempt de liaisons multiples carbone-carbone aliphatiques en bout de chaîne, éventuellement substitué,
R³ et R⁴ ayant chacun, indépendamment l'un de l'autre, la signification d'un atome d'hydrogène ou d'un radical alkyle ayant de 1 à 20 atomes de carbone,
m étant 0 ou un nombre entier valant de 1 à 1 000,
n étant un nombre entier valant de 1 à 200, étant entendu que les m+n unités peuvent être réparties statistiquement dans la molécule,
Z représentant un radical hydrocarboné monovalent, exempt de liaisons multiples carbone-carbone aliphatiques en bout de chaîne, qui peut contenir un ou plusieurs hétéroatomes choisis dans l'ensemble constitué par les atomes d'oxygène, d'azote, de bore, de silicium et de titane,
ou représentant un radical polymère monovalent ayant plus de 20 atomes de carbone,
f étant un nombre entier valant de 2 à 22 et
k étant 0 ou 1,
et dans une deuxième étape on condense les siloxanediols (3) obtenus dans la première étape, de formule générale
HO(R₂SiO)ₘ((Z-C_{f}H_{2f-2k})RSIO)ₙ₋ₒ(HRSIO)ₒH (III)
où o est égal à 0 ou à un nombre entier valant de 1 à 10.

2. Procédé selon la revendication 1, **caractérisé en ce que** le composé organique (2) utilisé consiste en un tel composé qui est constitué d'atomes de carbone, d'hydrogène, éventuellement d'oxygène et éventuellement d'azote.

3. Procédé selon la revendication 1 ou 2, **caractérisé en ce que** le composé (2) est utilisé en une quantité telle que le rapport molaire des radicaux à liaison multiple carbone-carbone aliphatique aux groupes SiH du composant (1) est compris entre 0,5 et 5.

4. Procédé selon une ou plusieurs des revendications 1 à 3, **caractérisé en ce que** la condensation s'effectue par addition de composés siliciés (4) qui contiennent au moins deux groupes hydrolysables par molécule, qui condensent avec les groupes silanol du composé (3).

5. Procédé selon la revendication 4, **caractérisé en ce que** les composés siliciés, qui contiennent au moins deux groupes hydrolysables par molécule, consistent en des silanes de formule générale
AₐR¹_{b}Si(OR²)_{4-a-b} (IV)
dans laquelle
A peut être le même ou différent et représente un radical monovalent de formule -CR⁵₂-Y,
R⁵ peut être le même ou différent et représente un atome d'hydrogène ou un radical alkyle,
Y représente un hétéroatome monofonctionnel choisi dans le groupe des halogènes, des atomes O et S monosubstitués et des atomes N et P substitués,
R¹ peut être le même ou différent et représente un radical hydrocarboné monovalent, éventuellement substitué,
R² peut être le même ou différent et représente un radical alkyle,
a est égal à 0, 1 ou 2,
b est égal à 0, 1 ou 2,
étant entendu que a+b est ≤ 2.

6. Procédé selon la revendication 4 ou 5, **caractérisé en ce que** les composés siliciés (4) sont utilisés en quantités allant de 0,01 à 10 parties en poids, par rapport à 100 parties en poids du composé (3).
